# NEUE EUROPÄISCHE PATENTSCHRIFT

(11) **EP 1 755 817 B2**
(45) Veröffentlichungstag und Bekanntmachung des Hinweises auf die Entscheidung über den Einspruch: **30.05.2012**
(45) Hinweis auf die Patenterteilung: 25.03.2009
(21) Anmeldenummer: 05750208.0
(22) Anmeldetag: 09.06.2005
(51) Int. Cl.: B23K 9/133

(54) **DRAHTFÖRDERVORRICHTUNG**
WIRE ADVANCING DEVICE
DISPOSITIF POUR TRANSPORTER UN FIL

(30) Priorität: 09.06.2004 AT 10022004
(43) Veröffentlichungstag der Anmeldung: 28.02.2007
(73) Patentinhaber: Fronius International GmbH, 4643 Pettenbach (AT)
(72) Erfinder: KRONEGGER, Wolf, A-4655 Vorchdorf (AT); STIEGLBAUER, Walter, A-4901 Manning (AT)
(74) Vertreter: Sonn & Partner Patentanwälte
(86) Internationale Anmeldenummer: PCT/AT2005/000207
(87) Internationale Veröffentlichungsnummer: WO 2005/120760

(56) Entgegenhaltungen:
- EP-A- 1 206 993
- US-A- 2 272 158
- US-A- 5 743 307
- US-A- 6 066 833

## Beschreibung

Die Erfindung betritft eine Drahtfordervorrichtung zum transport eines Schweißdrahtes, mittels eines durch zumindest eine Antriebsrolle und zumindest eine Druckrolle gebildeten Fördermittels von einem Drahtvorrat zu einem Schweißbrenner, mit einer Verstellvorrichtung zur Anpassung des Anpressdruckes der Fördermittel auf den Schweißdraht.

Bei den aus dem Stand der Technik bekannten Systemen sind unterschiedliche Draht fördervorrichtungen bzw. Antriebe eingesetzt, welche meist große Abmessungen aufweisen und hohem Schlupf und Verschleiß unterliegen. Der Großteil dieser Drahtfördervorrichtungen ist lediglich für einen bestimmten eingestellten Schweißdraht einsetzbar, sodass nur ein Schweißdraht mit dem voreingestellten Schweißdrahtdurchmesser bzw. Material von der Drahtfördervorrichtung gefördert werden kann. Bei einem Wechsel des Schweißdrahtes müssen abhängig von Material und Durchmesser des gewählten Schweißdrahtes zur optimalen Drahtförderung Teile der Drahtfördervorrichtung gewechselt oder diese neu eingestellt werden.

Es sind auch Drahtfördervorrichtungen bekannt, bei welchen mit Hilfe federnder Elemente, welche auf Fördermittel drücken, unterschiedliche Schweißdrähte gefördert werden können. Jedoch ist dadurch der Anpressdruck bei einem dickeren Schweißdrahtdurchmesser wesentlich höher als bei einem dünneren Schweißdraht. Des weiteren kann bei diesen Drahtfördervorrichtungen nicht Einfluss auf die Schweißdrahtzusammensetzung genommen werden, d.h. dass beispielsweise bei einem Schweißdraht mit hohem Aluminiumanteil die Oberfläche des Schweißdrahtes wesentlich leichter verformt werden kann als bei einem Schweißdraht mit hohem Anteil festerer Elemente als Aluminium. Somit können diese Drahtfördervorrichtungen zwar Schweißdrähte unterschiedlichen Durchmessers und auch unterschiedlicher Zusammensetzungen fördern, jedoch kann nicht Einfluss auf den Anpressdruck genommen werden, wodurch beispielsweise bei zu hohem Anpressdruck Verformungen des Schweißdrahtes auftreten können und beispielsweise bei zu geringem Anpressdruck es passieren kann, dass die Fördermittel durchrutschen, also einen hohen Schlupf aufweisen, wodurch keine konstante Schweißdrahtförderung ermöglicht werden kann.

Beispielsweise beschreibt die EP 1 206 993 A eine Drahtfördervorrichtung der gegenständlichen Art bei der eine Anpassung des Anpressdrucks auf den Schweißdraht insbesondere bei Verwendung von Schweißdrähten mit unterschiedlichem Durchmesser nicht vorgesehen ist.

Auch die US 2,272,158 A zeigt eine Vorrichtung zum Fordern eines Schweißdrahts bei der keine Anpassung des Anpressdrucks auf den Schweißdraht vorgesehen ist.

Die Aufgabe der vorliegenden Erfindung besteht in der Schaffung einer oben genannten Drahtfördervorrichtung, welche geringen Schlupf aufweist und den Schweißdraht möglichst wenig verformt. Eine weitere Aufgabe der Erfindung besteht darin, Schweißdrähte mit unterschiedlichem Durchmesser fördern zu können. Die Anspannung des Anpressdrucks des Fördermittel auf den eingesetzten Schweißdraht soll automatisch erfolgen und vom Schweißgerät selbstständig geregelt werden.

Die erfindungsgemäßen Aufgaben werden dadurch gelöst, dass die Verstellvorrichtung zumindest ein auf die zumindest eine Druckrolle wirkendes elastisch oder plastisch verformbares Druckmittel aufweist, welches mit einer Versorgungseinheit verbunden ist. Der Vorteil liegt darin, dass ein einfaches, aus dem Stand der Technik bekanntes Druckmittel eingesetzt werden kann, welches in einfacher Art und Weise ausgeführt ist und somit die Drahtfördervorrichtung automatisch auf den eingeschobenen bzw. eingesetzten Schweißdraht eingestellt wird. Ein weiterer Vorteil liegt darin, dass bei einem Wechsel des Schweißdrahtes, also wenn für einen Schweißprozess ein anderer Schweißdraht benötigt wird, keine Teile der Drahtfördervorrichtung zur problemlosen Drahtförderung getauscht werden müssen, wodurch sich eine wesentlich vereinfachte Handhabung der Drahtfördervorrichtung ergibt. Durch die Bildung des Fördermittels durch Rollen wird eine sichere Förderung des Schweißdrahtes gewährleistet.

Um eine entsprechende Wirkung des Druckmittels auf das Fördermittel zu erreichen, ist das Druckmittel vorteilhafterweise zwischen der zumindest einen Druckrolle und einer Stützfläche bzw. einem Abstützelement an der gegenüberLiegenden Seite der zumindest einen Druckrolle angeordnet.

Die Verbindung zwischen dem Druckmittel und der Versorgungseinheit kann über Leitungen und bzw. oder Bohrungen und bzw. oder Strömungskanäle hergestellt werden.

Das plastisch oder elastisch verformbare Druckmittel kann durch einen Druckschlauch oder ein Pneumatikpad gebildet sein. Dadurch kann mit dem Druckmittel eine einfache Druckregelung und somit eine einfache Anpassung an die jeweiligen verwendeten Schweißdrähte erfolgen. Es müssen keine teile der Drahtfördereinrichtung bei geändertem Schweißdraht insbesondere großerem oder kleinerem Schweißdrahtdurchmessermaterial gewechselt werden. Dadurch kann ein sehr kostengünstiger Aufbau der Druckfördereinrichtung realisiert und gleichzeitig eine exakte Druckanpassung des Anpressdruckes in einfacher Form ermogleicht werden.

Der Druckschlauch ist an einem Ende vorteilhafterweise verschlossen und weist einen Füllstützen für die Zuführung eines Mediums auf. Dadurch kann die Druckregelung des Druckmittels durch Zu- bzw. Abfuhr des Mediums in einfacher Art und Weise erfolgen.

Dabei kann der Füllstützen über eine Leitung mit einem, das Medium aufweisenden Behälter, welcher die Versorgungseinheit bildet, verbunden sein. Der die Versorgungseinheit bildende Behälter kann dabei sowohl im Schweißgerät als auch außerhalb des Schweißgerätes angeordnet sein.

Der Behälter kann aus einer Gasflasche oder einem Druckbehälter gebildet sein. Somit kann ein aus dem Stand der Technik bekannter Behälter für das Medium verwendet werden, wobei hierzu ein unabhängiges Drucksystem für die Druckanpassung des Druckmittels geschaffen wird.

Wenn das im Druckmittel angeordnete Medium durch ein Gas gebildet wird, wird kein zusätzlicher Behälter bzw. Druckbehälter benötigt, da zum Aufbau des Drucks im Druckmittel das für den Schweißprozess verwendete Gas bzw. Schutzgas eingesetzt werden kann.

Ebenso kann als Medium eine Flüssigkeit verwendet werden und dadurch ein einfaches und jederzeit erneuerbares bzw. nachfüllbares Medium geschaffen werden.

Gemäß einem weiteren Merkmal der Erfindung ist vorgesehen, dass die Anpresskraft der zumindest einen Druckrolle auf den jeweiligen Schweißdraht am Schweißgerät und/oder an einer Steuervorrichtung und/oder an einem Bedienpaneel und/oder an einer Fernbedienung einstellbar ist.

Dabei werden insbesondere die Dicke und das Material des verwendeten Schweißdrahtes eingegeben.

Um eine automatische Einstellung des Anpressdrucks zu erzielen, ist vorteilhafterweise eine Einrichtung zur Regelung des Anpressdrucks der zumindest einen Druckrolle vorgesehen, die den Anspressdruck in Abhängigkeit der eingestellten Werte für den verwendeten Schweißdraht insbesondere die Dicke und bzw. oder das Material regelt. Vom Benutzer des Schweißgerätes muss lediglich der eingesetzte Schweißdraht bekannt gegeben werden, also beispielsweise das verwendete Material und die verwendete Dicke bzw. der Durchmesser des schweißdrahtes eingegeben werden, worauf vom Schweißgerät bzw. der Steuervorrichtung eine automatische Regelung des Anpressdrucks durchgeführt wird.

Gemäß einem weiteren Merkmal der Erfindung ist eine Einrichtung zur Erfassung des Ist-Werts des Drucks der zumindest einen Druckrolle auf den Schweißdraht oder auch eine Einrichtung zur Erfassung des Ist-Werts der Schweißdrahtgeschwindigkeit angeordnet. Dadurch kann die Drahtfördergeschwindigkeit und somit auch beispielsweise der Schlupf der Rollen ermittelt werden und der Druck der Verstellvorrichtung durch das Schweißgerät und/oder die Steuervorrichtung und/oder das Bedienpaneel angepasst werden. Somit kann beispielsweise der Anpressdruck bei sich durchdrehenden Rollen erhöht werden, wodurch der Schlupf verringert wird.

Mit Hilfe einer Handpumpe und allenfalls einem Ventil kann eine manuelle Druckeinstellung durch den Benutzer auf die geforderten Verhältnisse durchgeführt werden.

Die vorliegende Erfindung wird anhand der beigefügten Zeichnungen näher erläutert.

Darin zeigen:
Fig. 1 eine schematische und vereinfachte Darstellung einer Schweißmaschine bzw. eines Schweißgerätes;
Fig.2 eine schematische und vereinfachte Darstellung eines Schweißbrenners mit einem Teilschnitt des Schweißbrenners im Bereich der Drahtfördervorrichtung;
Fig.3 eine schematische und vereinfachte Darstellung eines Schweißbrenners mit einem Teilschnitt des Schweißbrenners im Bereich der Drahtfördervorrichtung;
Fig.4 eine geschnittene Detailansicht der erfindungsgemäßen Drahtfördervorrichtung schematisch und vereinfacht dargestellt;
Fig.5 eine Ansicht auf die Drahtfördereinrichtung gemäß Fig.4 in Richtung des Schweißdrahtes.

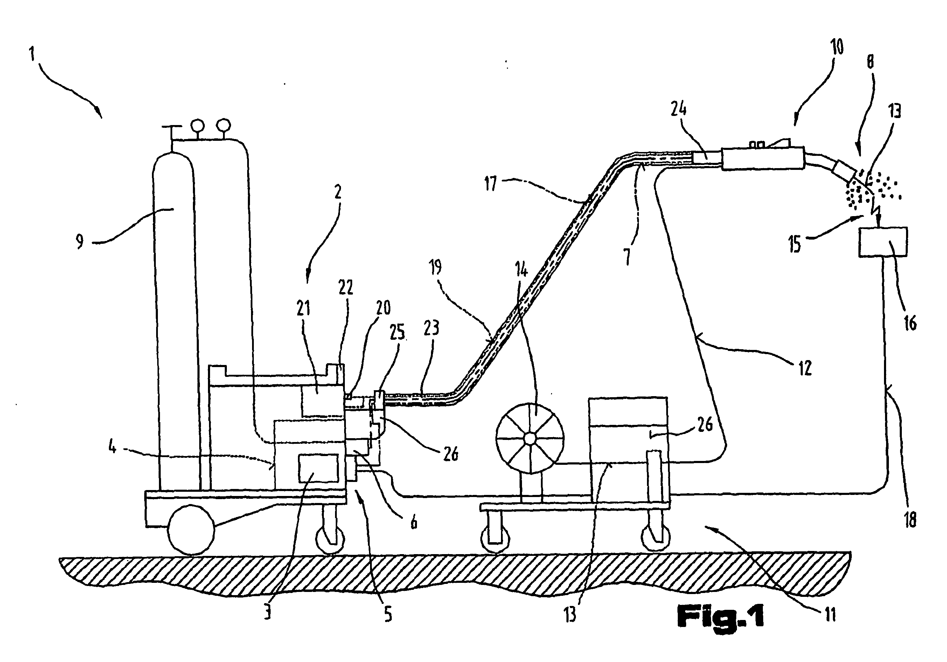

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO2, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einem Drahtvorrat 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist des weiteren eine Ein- und/oder Ausgabevorrichtung 22 auf, über welche die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Des weiteren ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

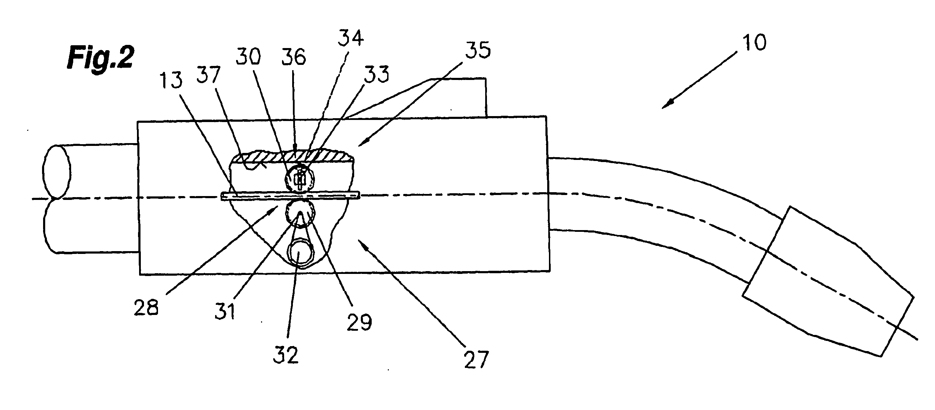

In den Fig. 2 bis 5 sind nun Ausführungsbeispiele für die erfindungsgemäße, automatische Anpressdruckeinstellung bei der Drahtförderung schematisch und vereinfacht dargestellt.

Fig. 2 zeigt einen Schweißbrenner 10 in vereinfacht und schematisch dargestellter Seitenansicht. Im Schweißbrenner 10 ist in diesem Ausführungsbeispiel eine Drahtfördervorrichtung 27 angeordnet. Der Bereich des Schweißbrenners 10, in welchem nunmehr die Drahtfördervorrichtung 27 angeordnet ist, ist dabei teilweise geschnitten dargestellt.

Weiters ist in der Drahtfördervorrichtung 27 ein Fördermittel 28 angeordnet, welches aus zumindest einer Antriebsrolle 29 und zumindest einer Druckrolle 30 besteht. Die Antriebsrolle 29 ist dabei mit einer Welle 31 drehfest verbunden. Die Welle 31 kann beispielsweise über ein Getriebe mit einem Antrieb 32, insbesondere einem Antriebsmotor oder aber auch direkt mit dem Antrieb 32 verbunden sein. Um nunmehr einen Druck auf den Schweißdraht 13 auszuüben, damit dieser gefördert wird, ist an der dem Schweißdraht 13 gegenüberliegenden Seite der Antriebsrolle 29 die Druckrolle 30 angeordnet. Die Druckrolle 30 ist dabei beweglich in Richtung des Schweißdrahtes 13 angeordnet und auf einer weiteren Welle 33 gelagert, wobei die Welle 33 entlang beispielsweise einer Nut 34 verstellbar angeordnet ist. An der der Nut 34 gegenüberliegenden Seite der Druckrolle 30 ist nunmehr eine Verstellvorrichtung 35 angeordnet, welche ein Druckmittel 36 aufweist. Das Druckmittel 36 kann dabei plastisch oder elastisch verformbar ausgebildet sein und ist zwischen dem Fördermittel 28, insbesondere der Druckrolle 30, und an einer Stützfläche bzw. einem Abstützelement 37 der dem Fördermittel 28 gegenüberliegenden Seite angeordnet. Die Druckrolle 30 drückt mittels des Druckmittels 36 auf den in die Drahtfördervorrichtung 27 eingeschobenen Schweißdraht 13 und diesen somit gegen die Antriebsrolle 29. Dadurch wird der Schweißdraht 13 im Fördermittel 28 geklemmt und durch die Antriebsrolle 29 in die jeweilige Richtung, also beispielsweise in Richtung des Werkstücks 16 oder in die entgegengesetzte Richtung gefördert. Um nunmehr einen Schweißdraht 13 mit anderen Eigenschaften fördern zu können, muss das Druckmittel 36 ausgetauscht werden, damit wieder der für eine reibungslose Drahtförderung benötigte Anpressdruck auf den Schweißdraht 13 erreicht wird und somit eine sichere und komplikationslose Förderung des Schweißdrahtes 13 gewährleistet ist.

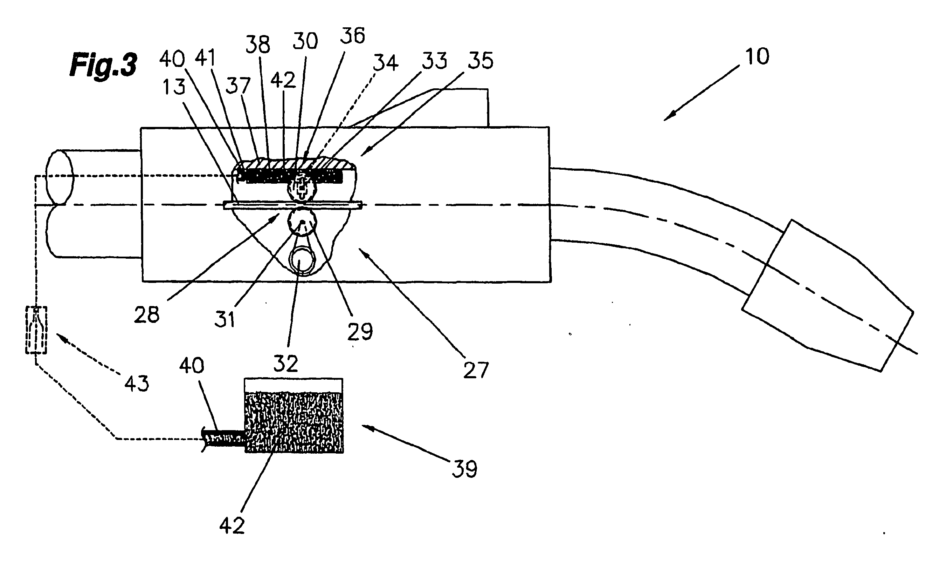

Bei der Ausführungsform gemäß Fig. 3 ist das Druckmittel 36 beispielsweise aus einem Druckschlauch 38 gebildet. Das Druckmittel 36 bzw. der Druckschlauch 38 ist dabei wiederum zwischen dem Fördermittel 28, insbesondere der Druckrolle 30, und dem Abstützelement 37 angeordnet und mit einer Versorgungseinheit 39, insbesondere einem Behälter, über eine Leitung 40 und/oder Bohrungen und/oder Strömungskanäle verbunden. Die Versorgungseinheit 39 bzw. der Behälter kann beispielsweise im Schweißgerät 1 oder aber auch außerhalb des Schweißgerätes 1 angeordnet sein, jedoch ist diese Anordnung in diesem Ausführungsbeispiel nicht dargestellt. Der Druckschlauch 38 ist an einem Ende verschlossen und weist an dem der Leitung 40 zugewandten Ende einen Füllstutzen 41 auf. Auf diesen Füllstutzen 41 wird nunmehr die Leitung 40 aufgeschoben und befestigt. Somit ist das Druckmittel 36, also der Druckschlauch 38, und der Füllstutzen 41 über die Leitung 40 mit der Versorgungseinheit 39, welche im Schweißgerät 1 oder aber auch außerhalb, also extern angeordnet sein kann, verbunden. In der Versorgungseinheit 39 ist ein Medium 42 angeordnet, welches nunmehr über die Leitung 40 in den Druckschlauch 38 eingebracht wird. Um einen Druck im Druckschlauch 38 aufzubauen, um diesen derart aufzupumpen, dass der Druckschlauch 38 gegen das Fördermittel 28, insbesondere gegen die Druckrolle 30, und diese dann den Schweißdraht 13 gegen die Antriebsrolle 29 drückt, ist weiters beispielsweise ein Ventil, insbesondere ein proportionales Druckregelventil 43 angeordnet. Auf die Beschreibung des proportionalen Druckregelventils 43 wird nicht näher eingegangen, da dieses aus dem Stand der Technik bestens bekannt ist. Das Druckregelventil 43 kann dabei in der Versorgungseinheit 39 und/oder in der Leitung 40 angeordnet sein. Somit wird der eingesetzte Schweißdraht 13 im Schweißgerät 1 bzw. in der Steuervorrichtung 4 vom Benutzer eingegeben und das Schweißgerät 1 bzw. die Steuervorrichtung 4 regelt den Anpressdruck des Fördermittels 28, insbesondere der Druckrolle 30 auf den Schweißdraht 13 selbständig. Dies erfolgt derart, dass die Steuervorrichtung 4 die erforderlichen Werte, insbesondere die Druckwerte für den eingesetzten Schweißdraht 13, dem Druckregelventil 43 übermittelt. Natürlich ist es auch möglich, die Dicke und das Material des Schweißdrahtes 13 dem Schweißgerät 1 und/oder dem Bedienpaneel und/oder der Steuervorrichtung 4 bekannt zu geben, worauf beispielsweise die Steuervorrichtung 4 den Anpressdruck regelt.

Somit regelt das Schweißgerät 1 bzw. die Steuervorrichtung 4 und das von der Steuervorrichtung 4 angesteuerte Druckregelventil 43 automatisch den Druck, insbesondere den Anpressdruck des Fördermittels 28, insbesondere der Druckrolle 30 auf den Schweißdraht 13. Dadurch ist eine sichere Förderung des Schweißdrahtes 13 gewährleistet, ohne dass die Druckrolle 30 und die Antriebsrolle 29 durchrutschen oder den Schweißdraht 13 verformen.

Natürlich ist es auch möglich, anstelle des proportionalen Druckregelventils 43 sämtliche aus dem Stand der Technik bekannte Mittel zum Druckaufbau im Druckmittel 36 anzuordnen. Beispielsweise kann der Druckaufbau im Druckmittel 36 auch derart realisiert werden, dass eine Handpumpe anstelle des Druckregelventils 43 verwendet wird. Dadurch kann der Benutzer mittels der Handpumpe den Druck individuell regeln. Weiters kann auch eine Einrichtung zur Erfassung des Ist-Werts des Drucks in der Leitung 40, also zwischen dem Druckregelventil 43 und dem Füllstutzen 41, angeordnet sein, und der tatsächliche Druckwert beispielsweise über ein Manometer angezeigt werden.

Das verwendete Medium 42 kann beispielsweise aus einer Flüssigkeit gebildet sein, es ist aber auch möglich ein gasförmiges Medium 42 im Druckmittel 36 einzusetzen. Vorteilhafterweise kann das Schutzgas des Schweißprozesses als Medium 42 verwendet werden. Da lediglich geringe Mengen des Mediums 42 zur reibungslosen Druckeinstellung benötigt werden, wird der Schweißprozess dadurch in keinster Weise beeinflusst. Natürlich kann zu diesem Fall die Versorgungseinheit 39 aus einer Gasflasche oder einem Druckbehälter gebildet sein.

Das Druckmittel 38 kann auch aus einem aus dem Stand der Technik bekannten Pneumatikpad gebildet werden, wobei dieses ebenfalls einen Füllstutzen 41 aufweist, über welches es mit dem Medium 42 befüllt werden kann. Das Pneumatikpad kann dabei wiederum mit einer Flüssigkeit oder einem gasförmigen Medium 42, wie z.B. Luft oder einem Gas gefüllt und vom Schweißgerät 1 bzw. der Steuervorrichtung 4 angesteuert und geregelt werden. Somit ist es wiederum möglich, das Medium 42 aus dem jeweils für den Schweißprozess eingesetzten Schutzgas zu bilden. Somit ist kein zusätzlicher Behälter für das Medium 42 notwendig.

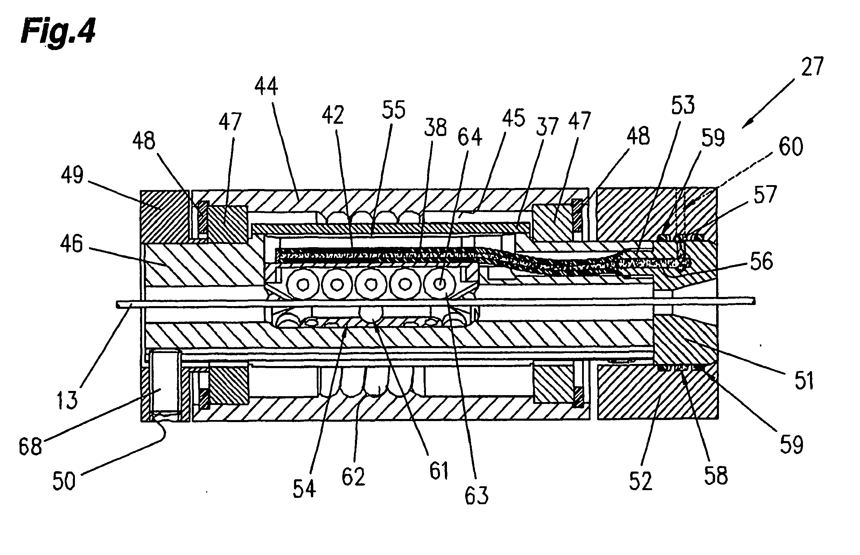

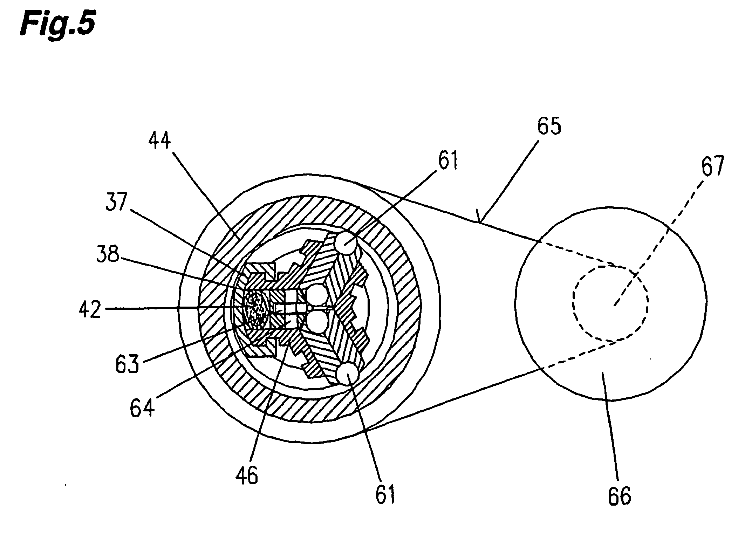

Die Fig. 4 und 5 zeigen eine weitere Ausführungsvariante der erfindungsgemäßen Drahtfördervorrichtung 27 mit automatischer Druckanpassung an den Schweißdraht 13, in schematischer und vereinfachter Form.

Die Drahtfördervorrichtung 27 ist dabei aus einem Grundkörper 44 gebildet, wobei in eine zentrische Ausnehmung 45 des Grundkörpers 44 ein Halteelement 46 eingeschoben wird. Das Halteelement 46 wird dabei beispielsweise über zumindest ein Lager 47 im Inneren des Grundkörpers 44 gelagert. Das zumindest eine Lager 47 wird dabei über in der Ausnehmung 45 des Grundkörpers 44 angeordnete Ringe 48 gegen Herausfallen gesichert. Diese Ringe 48 können durch bekannte Sägerringe gebildet sein. Das Halteelement 46 ragt an beiden Seiten über den Grundkörper 44 heraus. An einer Seite ist eine Aufnahme 49 angeordnet, welche drehfest mit dem Halteelement 46 verbunden ist. Dabei kann ein Gewinde 50 normal zum Schweißdraht 13 in der Aufnahme 49 angeordnet sein, in welches eine Wurmschraube 68 bis zum Kontakt mit dem Halteelement 46 eingeschraubt wird und somit die Aufnahme 49 drehfest mit dem Halteelement 46 verbindet. Auf der gegenüberliegenden Seite der Aufnahme 49 ist ein Aufnahmeelement 51 angeordnet, auf welches ein Haltering 52 aufgeschoben wird. Das Aufnahmeelement 51 weist weiters einen Fortsatz 53 auf, auf welchen das Druckmittel 36, insbesondere der Druckschlauch 38 aufgeschoben wird. Der Druckschlauch 38 ragt dabei vom Aufnahmeelement 50 bis zu mindestens einem Förderelement 54 bzw. zumindest einem Druckelement 55. Das Förderelement 54 und das Druckelement 55 sind im Halteelement 46 um den Schweißdraht 13 herum angeordnet.

Im Aufnahmeelement 51 ist insbesondere zentrisch zum Fortsatz 53, eine Bohrung 56 angeordnet, welche in einer weiteren radial angeordneten Bohrung 57 mündet. Im Haltering 52 ist zumindest eine umlaufende Nut 58 angeordnet, in welcher die Bohrung 57 mündet. Auf beiden Seiten der Nut 58 können zwei weitere Nuten 59 angeordnet sein, welche beispielsweise als Dichtung gegenüber der Nut 58 ausgebildet sind und in welche beispielsweise ein bekannter O-Ring eingesetzt werden kann. Weiters ist eine Zuführbohrung 60 normal zur Mittelachse des Halteelements 46 angeordnet, welche in der Nut 58 mündet.

Über die Zuführbohrung 60 wird das Medium 42 in die Nut 58 eingebracht und gelangt über die Bohrung 57 im Aufnahmeelement 51 zur Bohrung 56 und über den Fortsatz 53 in den Druckschlauch 38. Somit ist eine einfache und unkomplizierte Zuführung des Mediums 42 zum Druckelement 36, insbesondere zum Druckschlauch 38 geschaffen.

In dem dargestellten Ausführungsbeispiel sind ein Druckelement 55 und zwei Förderelemente 54 beispielsweise unter 120° um den Schweißdraht 13 herum angeordnet. Die Förderelemente 54 sind dabei starr im Halteelement 46 angeordnet, während das Druckelement 55 in Richtung des Schweißdrahtes 13 hin beweglich im Halteelement 46 gelagert ist. Vom Druckschlauch 38 wird ein Druck auf das Druckelement 55 ausgeübt, welches wiederum einen Druck auf den Schweißdraht 13 ausübt, wodurch eine Wirkverbindung zwischen dem Schweißdraht 13, dem bzw. den Förderelementen 54 und dem Druckelement 55 entsteht. Der Schweißdraht 13 wird also von den Förderelementen 54 und dem Druckelement 55 angetrieben und somit gefördert.

Im Förderelement 54 sind entlang einer Führungsbahn umlaufend Elemente 61 angeordnet, welche an der dem Schweißdraht 13 zugewandten Seite teilweise außerhalb des Förderelements 54 verlaufen. Die Elemente 61 verlaufen dabei soweit außerhalb des Förderelements 54, dass diese nicht aus dem Förderelement 54 herausfallen können, aber den Schweißdraht 13 berühren. Auf der dem Schweißdraht 13 gegenüberliegenden Seite des Förderelements 54 laufen die Elemente 61 wiederum teilweise außerhalb des Förderelements 54 und greifen in ein Innengewinde 62 ein, welches im Inneren des Grundkörpers 44 der Drahtförderung 27, also in der Ausnehmung 45, angeordnet ist. Durch Drehung des Grundkörpers 44 der Drahtförderung 27 werden nunmehr die in das Innengewinde 62 eingreifenden Elemente 61 entlang der Führungsbahn des Förderelements 54 verschoben. Somit wird der Schweißdraht 13 durch die auf den Schweißdraht 13 einwirkenden Elemente 61 und die dadurch entstehende Wirkverbindung verschoben, insbesondere gefördert.

Das Druckelement 55 ist in diesem Ausführungsbeispiel aus zumindest zwei Teilen gebildet, zwischen welchen zumindest eine Rolle 63 angeordnet ist. Die zumindest eine Rolle 63 ist auf einer Achse 64 drehbar gelagert und ragt teilweise aus dem Druckelement 55 heraus, sodass sie auf den Schweißdraht 13 einen Druck ausüben kann. Auf der dem Schweißdraht 13 gegenüberliegenden Seite der Rolle 63 ist das Druckmittel 36 bzw. der Druckschlauch 38 angeordnet. Der Druckschlauch 38 kann auf den Fortsatz 53 des Aufnahmeelements 51 aufgesteckt werden, kann aber auch anders am Fortsatz 53 bzw. am Aufnahmeelement 51 befestigt sein. Das Druckelement 55 wird über den Druckschlauch 38 in Richtung des Schweißdrahtes 13 verschoben. Der Druckschlauch 38 wird zu diesem Zweck mit dem Medium 42 gefüllt, wie oben beschrieben wurde.

Im Schweißgerät 1 muss lediglich der verwendete Schweißdraht 13 beispielsweise durch Angabe seines Durchmessers und des Materials eingegeben werden. Der Druck, welcher mittels des Druckschlauches 38 auf das Druckelement 54 ausgeübt wird und in weiterer Folge auf den Schweißdraht 13 wirkt, kann nun vom Schweißgerät 1, also von der Steuervorrichtung 4 des Schweißgerätes 1, selbständig geregelt werden. Dadurch sind vom Benutzer keine weiteren Einstellungen bzw. Anpassungen für eine optimale Drahtförderung notwendig. Weiters ist bei einem Wechsel des Schweißdrahtes 13 kein Wechsel der für die Drahtförderung notwendigen Teile, insbesondere des Fördermittels 28, nötig, wodurch eine einfache, unkomplizierte Handhabung der Drahtfördervorrichtung 27 erreicht wird.

Um die Elemente 61 mittels des im Förderelement 54 umlaufenden Innengewindes 62 zu verschieben, wird der Grundkörper 44 um seine Mittelachse gedreht. Dadurch werden die Elemente 61 entlang der Führungsbahn des Förderelementes 54 verschoben. Der Grundkörper 44 der Drahtförderung 27 kann beispielsweise über einen Keil- und/oder Zahnriemen 65 angetrieben werden, welcher über den Grundkörper 44 und einen Antrieb 66 bzw. einer Welle 67 des Antriebs 66 gespannt wird. Der Antrieb 66 ist dabei bevorzugt parallel zur Drahtfördervorrichtung 27, also seitlich zur Drahtfördervorrichtung 27 angeordnet. Natürlich ist es auch möglich, den Antrieb 66 zentrisch zum Schweißdraht 13 bzw. zur Drahtfördervorrichtung 27 anzuordnen, wobei der Schweißdraht 13 durch den als Hohlwellenantrieb ausgebildeten Antrieb 66 geführt wird. Somit kann in einfacher Art und Weise eine baulich sehr kleine Drahtfördervorrichtung 27 geschaffen werden, welche beispielsweise im Schweißbrenner 10 angeordnet werden kann.

Die erfindungsgemäße Drahtfördervorrichtung 27 kann auch im Schweißgerät 1 und/oder im bzw. nach dem Drahtvorrat 14 und/oder im Schlauchpaket 23 angeordnet werden.

## Patentansprüche

1. Drahtfördervorrichtung (27) zum Transport eines Schweißdrahtes (13) mittels einem durch zumindest eine Antriebsrolle (29) und zumindest eine Druckrolle (30) gebildeten Fördermittel (28) von einem Drahtvorrat (14) zu einem Schweißbrenner (10), mit einer Verstellvorrichtung (35) zur Anpassung des Anpressdruckes der Fördermittel (28) auf den Schweißdraht (13), **dadurch gekennzeichnet, dass** die Verstellvorrichtung (35) zumindest ein auf die zumindest eine Druckrolle (30) wirkendes elastisch oder plastisch verformbares Druckmittel (36) aufweist, welches mit einer Versorgungseinheit (39) verbunden ist.

2. Drahtfördervorrichtung (27) nach Anspruch 1, **dadurch gekennzeichnet, dass** das Druckmittel (36) zwischen der zumindest einen Druckrolle (30) und einer Stützfläche bzw. einem Abstützelement (37) an der gegenüberliegenden Seite der zumindest einen Druckrolle (30) angeordnet ist.

3. Drahtfördervorrichtung (27) nach Anspruch 1 oder 2, **dadurch gekennzeichnet, dass** das Druckmittel (36) über eine Leitung (40) und bzw. oder eine Bohrung (56, 57) und bzw. oder Strömungskanäle mit der Versorgungseinheit (39) verbunden ist.

4. Drahtfördervorrichtung (27) nach einem oder mehreren der Ansprüche 1 bis 3, **dadurch gekennzeichnet, dass** das Druckmittel (36) beispielsweise aus einem Druckschlauch (38) gebildet ist.

5. Drahtfördervorrichtung (27) nach einem oder mehreren der Ansprüche 1 bis 4, **dadurch gekennzeichnet, dass** das Druckmittel (36) aus einem Pneumatikpad gebildet ist.

6. Drahtfördervorrichtung (27) nach Anspruch 4, **dadurch gekennzeichnet, dass** der Druckschlauch (38) an einem Ende verschlossen ist und einen Füllstutzen (41) für die Zuführung eines Mediums (42) aufweist.

7. Drahtfördervorrichtung (27) nach Anspruch 6, **dadurch gekennzeichnet, dass** der Füllstutzen (41) über eine Leitung (40) mit einem, das Medium (42) aufweisenden Behälter, welcher die Versorgungseinheit (39) bildet, verbunden ist.

8. Drahtfördervorrichtung (27) nach Anspruch 7, **dadurch gekennzeichnet, dass** der Behälter aus einer Gasflasche oder einem Druckbehälter gebildet ist.

9. Drahtfördervorrichtung (27) nach einem oder mehreren der Ansprüche 6 bis 8, **dadurch gekennzeichnet, dass** das im Druckmittel (38) angeordnete Medium (42) durch ein Gas gebildet ist.

10. Drahtfördervorrichtung (27) nach einem oder mehreren der Ansprüche 6 bis 8, **dadurch gekennzeichnet, dass** das im Druckmittel (38) angeordnete Medium (42) durch eine Flüssigkeit gebildet ist.

11. Drahtfördervorrichtung (27) nach einem oder mehreren der Ansprüche 1 bis 10, **dadurch gekennzeichnet, dass** die Anpresskraft der zumindest einen Druckrolle (30) auf den jeweiligen Schweißdraht (13) am Schweißgerät (1) und/oder an einer Steuervorrichtung (4) und/oder an einem Bedienpaneel und/oder an einer Fernbedienung einstellbar ist.

12. Drahtfördervorrichtung (27) nach einem oder mehreren der Ansprüche 1 bis 11, **dadurch gekennzeichnet, dass** eine Einrichtung zur Regelung des Anpressdrucks der zumindet einen Druckrolle (30) vorgesehen ist.

13. Drahtfördervorrichtung (27) nach einem oder mehreren der Ansprüche 1 bis 12, **dadurch gekennzeichnet, dass** eine Einrichtung zur Erfassung des Ist-Werts des Drucks der zumindest einen (30) auf den Schweißdraht (13) angeordnet ist.

14. Drahtfördervorrichtung (27) nach einem oder mehreren der Ansprüche 1 bis 13, **dadurch gekennzeichnet, dass** eine Einrichtung zur Erfassung des Ist-Werts der Fördergeschwindigkeit des Schweißdrahtes (13) angeordnet ist.

15. Drahtfördervorrichtung (27) nach einem oder mehreren der Ansprüche 1 bis 14, **dadurch gekennzeichnet, dass** eine Handpumpe zur manuellen Einstellung des Anpressdrucks der zumindest einen Druckrolle (30) vorgesehen ist.

16. Drahtfördervorrichtung (27) nach Anspruch 15, **dadurch gekennzeichnet, dass** ein Ventil, insbesondere ein proportionales Druckregelventil (43) und ein Manometer vorgesehen ist.

## Claims

1. A wire transport device (27) for transporting a welding wire (13) by the aid of transport means (28) formed by at least one drive roll (29) and at least one pressing roll (30) from a wire supply (14) to a welding torch (10), including an adjustment device (35) for adapting the contact pressure exerted by the transport means (28) on the welding wire (13), **characterized in that** the adjustment device (35) comprises at least one elastically or plastically deformable pressure means (36) which acts on the at least one pressing roll (30) and is connected with a supply unit (39).

2. The wire transport device (27) according to claim 1, **characterized in that** the pressure means (36) is arranged between the at least one pressing roll (30) and a supporting surface or supporting element (37) provided on the opposite side of the at least one pressing roll (30).

3. The wire transport device (27) according to claim 1 or 2, **characterized in that** the pressure means (36) is connected with the supply unit (39) via a line (40) and/or a bore (56, 57) and/or flow channels.

4. The wire transport device (27) according to any one or several ones of claims 1 to 3, **characterized in that** the pressure means (36) is, for instance, formed by a pressure hose (38).

5. The wire transport device (27) according to any one or several ones of claims 1 to 4, **characterized in that** the pressure means (36) is formed by a pneumatic pad.

6. The wire transport device (27) according to claim 4, **characterized in that** the pressure hose (38) is closed on one end and comprises a filler neck (41) for supplying a medium. (42).

7. The wire transport device (27) according to claim 6, **characterized in that** the filler neck (41) is connected via a line (40) with a container containing said medium (42) and constituting the supply unit (39).

8. The wire transport device (27) according to claim 7, **characterized in that** said container is comprised of a gas bottle or a pressure vessel.

9. The wire transport device (27) according to any one or several ones of claims 6 to 8, **characterized in that** the medium (42) contained in the pressure means (38) is comprised of a gas.

10. The wire transport device (27) according to any one or several ones of claims 6 to 8, **characterized in that** the medium (42) contained in the pressure means (38) is comprised of a liquid.

11. The wire transport device (27) according to any one or several ones of claims 1 to 10, **characterized in that** the contact force exerted by the at least one pressing roll (30) on the respective welding wire (13) is adjustable via the welding apparatus (1) and/or a control device (4) and/or an operating panel and/or a remote control.

12. The wire transport device (27) according to any one or several ones of claims 1 to 11, **characterized in that** a device for controlling the contact pressure of the at least one pressing roll (30) is provided.

13. The wire transport device (27) according to any one or several ones of claims 1 to 12, **characterized in that** a device for detecting the actual value of the pressure exerted by the at least one pressing roll (30) on the welding wire (13) is provided.

14. The wire transport device (27) according to any one or several ones of claims 1 to 13, **characterized in that** a device for detecting the actual value of the transport speed of the welding wire (13) is provided.

15. The wire transport device (27) according to any one or several ones of claims 1 to 14, **characterized in that** a manual pump is provided for the manual adjustment of the contact pressure of the at least one pressing roll (30).

16. The wire transport device (27) according to claim 15, **characterized in that** a valve, in particular a proportional pressure control valve (43), and a manometer are provided.

## Revendications

1. Dispositif de transport de fil (27) pour le transport d'un fil de soudage (13), à l'aide d'un moyen de transport (28), formé d'au moins un rouleau d'entraînement (29) et d'au moins un rouleau presseur (30), depuis une réserve de fil (14) jusqu'à l'emplacement d'un chalumeau de soudage (10), avec un dispositif de réglage (35) pour adapter la pression de pressage des moyens de transport (28) sur le fil de soudage (13), **caractérisé en ce que** le dispositif de réglage (35) comporte au moins un moyen de pression (36) déformable élastiquement ou plastiquement, agissant sur le au moins un rouleau presseur (30), lequel moyen de pression est relié à une unité d'alimentation (39).

2. Dispositif de transport de fil (27) selon la revendication 1, **caractérisé en ce que** le moyen de pression (36) est disposé entre le au moins un rouleau presseur (30) et une surface d'appui ou un élément d'appui (37) sur le côté opposé du au moins un rouleau presseur (30).

3. Dispositif de transport de fil (27) selon la revendication 1 ou 2, **caractérisé en ce que** le moyen de pression (36) est relié, par une conduite (40) et/ou un alésage (56, 57) et/ou des canaux d'écoulement, à l'unité d'alimentation (39).

4. Dispositif de transport de fil (27) selon une ou plusieurs des revendications 1 à 3, **caractérisé en ce que** le moyen de pression (36) est formé par exemple par un tuyau de pression (38).

5. Dispositif de transport de fil (27) selon une ou plusieurs des revendications 1 à 4, **caractérisé en ce que** le moyen de pression (36) est formé par un tampon pneumatique.

6. Dispositif de transport de fil (27) selon la revendication 4, **caractérisé en ce que** le tuyau de pression (38) est fermé à une extrémité et comporte une tubulure de remplissage (41) pour l'amenée d'un fluide (42).

7. Dispositif de transport de fil (27) selon la revendication 6, **caractérisé en ce que** la tubulure de remplissage (41) est reliée par une conduite (40) à un récipient, contenant le fluide (42), qui forme l'unité d'alimentation (39).

8. Dispositif de transport de fil (27) selon la revendication 7, **caractérisé en ce que** le récipient est formé par une bouteille à gaz ou un récipient sous pression.

9. Dispositif de transport de fil (27) selon une ou plusieurs des revendications 6 à 8, **caractérisé en ce que** le fluide (42) contenu dans le moyen de pression (38) est formé par un gaz.

10. Dispositif de transport de fil (27) selon une ou plusieurs des revendications 6 à 8, **caractérisé en ce que** le fluide (42) contenu dans le moyen de pression (38) est formé par un liquide.

11. Dispositif de transport de fil (27) selon une ou plusieurs des revendications 1 à 10, **caractérisé en ce que** la force de pression du au moins un rouleau presseur (30) sur le fil de soudage (13) respectif est réglable sur l'appareil de soudage (1) et/ou sur un dispositif de commande (4) et/ou sur un panneau de commande et/ou sur une télécommande.

12. Dispositif de transport de fil (27) selon une ou plusieurs des revendications 1 à 11, **caractérisé en ce qu'**il est prévu un dispositif pour la régulation de la pression de pressage du au moins un rouleau presseur (30).

13. Dispositif de transport de fil (27) selon une ou plusieurs des revendications 1 à 12, **caractérisé en ce qu'**il est prévu un dispositif pour relever la valeur réelle de la pression du au moins un rouleau presseur (30) sur le fil de soudage (13).

14. Dispositif de transport de fil (27) selon une ou plusieurs des revendications 1 à 13, **caractérisé en ce qu'**un dispositif est prévu pour relever la valeur réelle de la vitesse de transport du fil de soudage (13).

15. Dispositif de transport de fil (27) selon une ou plusieurs des revendications 1 à 14, **caractérisé en ce qu'**il est prévu une pompe manuelle pour le réglage manuel de la pression de pressage du au moins un rouleau presseur (30).

16. Dispositif de transport de fil (27) selon la revendication 15, **caractérisé en ce qu'**il est prévu une soupape, en particulier une soupape de régulation de pression proportionnelle (43) et un manomètre.
